# EUROPÄISCHE PATENTSCHRIFT

(11) **EP 1 206 176 B1**
(45) Veröffentlichungstag und Bekanntmachung des Hinweises auf die Patenterteilung: **07.05.2003**
(21) Anmeldenummer: 00956070.7
(22) Anmeldetag: 06.07.2000
(51) Int. Cl.: A01K 39/012

(54) **VORRICHTUNG ZUR VERSORGUNG VON TIEREN MIT FUTTER**
DEVICE FOR PROVIDING FOOD TO ANIMALS
DISPOSITIF POUR DISTRIBUER DES ALIMENTS A DES ANIMAUX

(30) Priorität: 22.07.1999 DE 29912821 U
(43) Veröffentlichungstag der Anmeldung: 22.05.2002
(73) Patentinhaber: Big Dutchman International GmbH, 49377 Vechta (DE)
(72) Erfinder: OTTO-LÜBKER, Friedrich, D-49635 Badbergen-Vehs (DE); REINKE, Arno, D-49424 Goldenstedt (DE)
(74) Vertreter: Siekmann, Gunnar, Dipl.-Phys.
(86) Internationale Anmeldenummer: DE0002221
(87) Internationale Veröffentlichungsnummer: WO01006846

(56) Entgegenhaltungen:
- IT-U- MI 930 630
- CODAF: "Spiral Automatic Feeder-Trough" , CODAF , IT XP002152128 Seite 3

## Beschreibung

Die Erfindung betrifft eine Vorrichtung zur Versorgung von Tieren mit Futter, mit einer Futterzuführung und einer der Bereitstellung des zugeführten Futters dienenden, napfartigen Freßschale, die etwa im Schalenzentrum einen Reinigungsdurchbruch hat, der mittels eines als ein bündig bzw. passend in den Reinigungsdurchbruch gesetzter Teil der Freßschale vorliegendes Verschlußelement freigebbar bzw, verschließbar ist, und sowohl das Verschlußelement an seiner Peripherie als auch die Freßschale im Bereich des Randes ihres Durchbruches befindliche, gegenseitig in Wirkverbindung bringbare Verriegelungsmittel aufweisen, mittels denen das Verschlußelement sowohl in der freigegebenen als auch in der verschließenden Stellung an der Freßschale festsetzbar bzw. davon lösbar ist, wobei das Verschlußelement im Zentrum eine kegelförmige Vorwölbung aufweist, deren Kegelfuß in einen zur Peripherie des Verschlußelementes hin abfallenden Flächenabschnitt ausläuft, das Verschlußelement und der Durchbruch kreisförmig gestaltet sind, und die Verriegelungsmittel umfassen
a) Vorsprünge, die an der Peripherie des Verschluß elementes angeordnet sind, derart, daß sie über den Rand des Reinigungsdurchbruchs vorstehen sowie
b) am Rand des Reinigungsdurchbruches befindliche Ausnehmungen,
wobei jede Ausnehmung derart dimensioniert ist, daß die Vorsprünge unter Führung in der innen jeweils zugeordneten Ausnehmung quer zur Schale bewegbar sind, sobald Verschlußelement und Freßschale in eine Position relativ zueinander bewegt sind, in der die Vorsprünge und die Ausnehmungen miteinander korrespondieren.

Vorrichtungen der vorbezeichneten Gattung sind nach der IT-U-MI 93 06 30 und dem Codaf-Prospekt "Spiral Automatic Feeder-Trough" bekannt. Die in einem Stall vorhandene Vielzahl von Freßnäpfen muß regelmäßig gereinigt werden. Dies erfolgt in einem Waschvorgang, zumeist mittels Wasserabspritzung. Um einen Ablauf des Waschwassers aus der gereinigten Freßschale zu gewährleisten, ist diese mit dem mittels des Verschlußelementes wahlweise zu öffnenden oder zu verschließenden Reinigungsdurchbruch versehen. Zu Reinigungszwecken werden die Verriegelungsmittel gelöst, so daß das Verschlußelement von der jeweiligen Freßschale abgenommen bzw. entfernt werden kann. Sodann ist eine Reinigung der Freßschale, beispielsweise durch Abspritzen, am Installationsort der Vorrichtung, also am Freßplatz der Tiere möglich.

Bei einem zumeist vorhandenen, nach innen eingezogenen Schalenrand, kann Restwasser durch den offenen Reinigungsdurchbruch zwar weitgehend bzw. vollständig ablaufen.

Problematisch bleibt dabei jedoch die Handhabung und der Verbleib der abgenommenen Verschlußelemente während der Bearbeitung der offenen Freßschale zum Zwecke ihrer Reinigung und/oder Desinfektion.

Der Erfindung liegt die Aufgabe zugrunde, eine Vorrichtung der vorbezeichneten Gattung so auszubilden, daß sie im Bedarfsfall einfach und optimal gereinigt werden kann.

Diese Aufgabe ist erfindungsgemäß dadurch gelöst, daß Fangorgane für das geöffnete Verschlußelement vorgesehen sind.

Die Fangorgane haben den Vorteil, daß sie das Verschlußelement in seiner Reinigungszwecken dienenden geöffneten Stellung mit der Vorrichtung weiter verbunden halten, und dadurch zum Beispiel eine Unverlierbarkeit gewährleistet ist. Die Fangorgane verhindern das Abfallen des gelösten bzw. ausgeklinkten Verschlußelementes vom mit der Vorrichtung verbunden bleibenden Teil der Freßschale. Dennoch können die Verriegelungsmittel in Verbindung mit den Fangorganen das von der Schale gelöste Verschlußelement derart halten und fixieren, daß ein für die Reinigung nachteiliges Ausweichen gegenüber Spritzwasser nicht auftritt. Das Verschlußelement wird während des Reinigungsvorganges ausreichend fest fixiert und gehalten.

Jedes Fangorgan kann eine an dem Verschlußelement angeordnete, sich in die Freßschale hinein vorstehende Erhebung umfassen, deren vorstehendes freies Ende eine den Rand des Durchbruches in der Freßschale übergreifende Fangnase aufweist.

Sobald das Verschlußelement relativ zur Freßschale in eine Stellung gedreht ist, in der die Ausnehmungen und die Vorsprünge miteinander korrespondieren, könnte das Verschlußelement von der Freßschale nach unten wegfallen. Nach Erreichen eines bestimmten Fallweges treten die Fangorgane in Funktion, indem die den Rand der Freßschale übergreifenden Fangnasen als Anschläge wirken, die einen weiteren Fallweg begrenzen.

Die Fangorgane können sowohl am Verschlußelement als auch an der Freßschale angeordnet sein. Zweckmäßig ist jedoch eine Anordnung der Fangorgane am Verschlußelement, wobei insbesondere die Montage zur verschlossenen, fertigen Freßschale dann besonders vorteilhaft dadurch vereinfacht ist, daß die Fangorgane gemäß einer Weiterbildung der Erfindung Konstruktionsteile sind, in die zugleich die Vorsprünge integriert sind, die es in den Ausnehmungen am Rand der Freßschale zu führen gilt.

Um dies zu verwirklichen, sieht die Erfindung vor, daß jede Erhebung eine auf den Flächenabschnitt gesetzte Radialrippe ist, deren äußeres Ende unten bzw. im Übergangsbereich zum Verschlußelement als Vorsprung, sowie oben, bzw. im in die Freßschale vorstehenden Bereich als Fangorgan ausgebildet ist. Dabei kann eine zwischen unterem und oberem Bereich der als Radialrippe vorliegenden Erhebung verlaufende Vorderkante als Führung ausgebildet und genutzt werden, welche das entriegelte Verschlußelement während seiner Bewegung bis zum Erreichen der durch Wirkung des Fangorgans vorbestimmten Öffnungsstellung, in der zugeordneten Ausnehmung führt, die sich am Rand des Durchbruches befindet. Die Fangnase des Fangorgans befindet sich am oberen Ende der vorderen, als Führung dienenden Kante der Radialrippe und ist so dimensioniert, daß sie nicht nur über den Rand des Durchbruches in der Freßschale vorsteht, sondern, noch weiter auch den Grund der ihr zugeordneten Ausnehmung am Rand des Durchbruches übergreift.

Vorzugsweise sind Freßschale und Verschlußelement Formteile aus Kunststoff, insbesondere Spritzguß-Formteile. Jede Erhebung und jede Konfiguration läßt sich an solche Kunststoffteile anformen, womit der Herstelivorgang, insbesondere bei hohen Stückzahlen im industriellen Maßstab problemlos ausführbar ist.

Damit die zur Durchführung von Reinigungsarbeiten erforderlichen Tätigkeiten erleichtert werden, weist die Freßschale Justierhilfen zur Festlegung der Position des relativ zur Freßschale bewegbaren, vorzugsweise drehbewegbaren Verschlußelements auf. Diese Justierhilfen vereinfachen es, das Verschlußelement von der Freßschale zu lösen, indem es, vorzugsweise manuell in die entsprechende Drehposition gebracht wird, bzw., nach Durchführung der Reinigungsarbeiten, wieder zurückdrehen, bis die Verriegelung mit der Freßschale eintritt.

Dabei ist erfindungsgemäß vorgesehen, daß jede Justierhilfe ein Anschlag ist, der vorsteht in den Weg, den die Erhebungen des Verschlußelementes bei drehender Relativbewegung des Verschlußelementes gegenüber der Freßschale beschreiben. Bei der vorgenannten speziellen Ausführungsform ist es somit die Radialrippe, die bewegt wird und in deren Bewegungsweg Anschläge vorstehen, um die Drehendstellungen des Verschlußelementes gegenüber der Freßschale zu bestimmen bzw, festzulegen.

Wenigstens einer der Anschläge kann als Federnocken ausgebildet sein und/oder mit schrägen Auflaufflanken ausgerüstet werden. Dies ermöglicht es, gegebenenfalls auch über einen Anschlag hinwegdrehen zu können, was insbesondere erforderlich sein kann, wenn nicht nur in der gelösten Stellung eine Sperrung wie durch die vorbeschriebene Führung gegen Zurückdrehen möglich sein soll, sondern auch eine Verriegelung in der verschließenden Stellung zwischen zwei die Radialrippe in dieser Stellung einfassenden Anschlägen erreicht werden soll.

Für diese Zwecke sieht die Erfindung eine Ausführung vor, bei der jede Ausnehmung zwischen einem Paar von in vorbestimmtem Abstand zueinander befindlichen Anschlägen angeordnet ist, wobei zwischen den Anschlägen des Anschlagpaares zusätzlich der mit Schrägflanken ausgerüstete und/oder als Federnocken ausgebildete dritte Anschlag angeordnet ist und wobei die Ausnehmung zwischen einem Anschlag des Anschlagpaares und dem dazwischen befindlichen zusätzlichen dritten Anschlag vorhanden ist.

Ein Ausführungsbeispiel der Erfindung, aus dem sich weitere erfinderische Merkmale ergeben, ist in der Zeichnung dargestellt. Es zeigen:
- Fig. 1:: eine Ansicht einer kompletten Freßschale von oben
- Fig. 2:: eine Ansicht einer Einzelheit der Freßschale gemäß Fig. 1 in vergrößertem Maßstab, wobei sich das Verschlußelement in verschließender Stellung befindet
- Fig. 3:: die Einzelheit entsprechend Fig. 2, jedoch bei in einer Drehposition befindlichem Verschlußelement, die der Einleitung der verschließenden Stellung gemäß Fig. 2 vorangeht oder der öffnenden Stellung des Verschlußelementes und
- Fig. 4:: die Ansicht entsprechend Fig. 3, bei der sich das Verschlußelement in die Freßschale öffnender Stellung befindet, so daß die Freßschale und das Verschlußelement einem Reinigungsprozeß unterwerfbar sind.

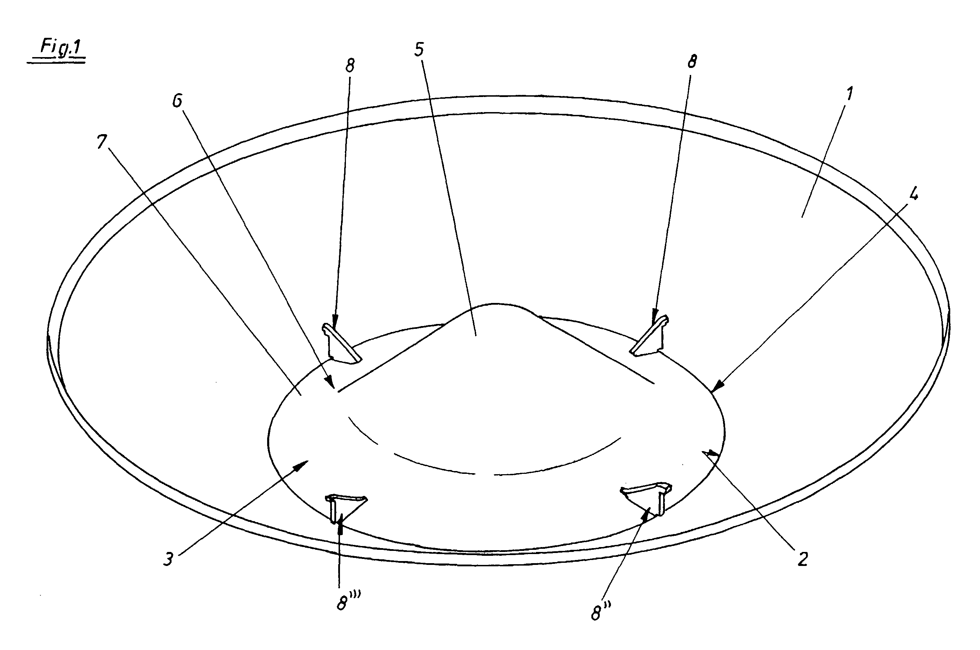

In Fig. 1. ist die Freßschale perspektivisch mit Blick in ihr Inneres dargestellt.

Die Freßschale 1 ist als runder Napf ausgeformt. Etwa im Zentrum der Freßschale 1 befindet sich ein kreisförmiger Durchbruch, dessen Rand 2 durch die hier sichtbare Kreislinie angedeutet ist. In dem Durchbruch sitzt bündig und dichtend eingepaßt ein ebenfalls kreisförmig ausgebildetes Verschlußelement 3. Die Peripherie 4 bzw. der Außenumfang des Verschlußelemences 3 ist so ausgebildet, daß in der hier dargestellten verschließenden Stellung die Peripherie 4 bzw. ein an der Peripherie 4 befindlicher Bereich den Rand 2 des Durchbruches in der Freßschale 1 untergreift, so daß ein Herausziehen oder -heben des Verschlußelementes nach oben in die Freßschale 1 hinein nicht möglich ist.

Das Verschlußelement 3 ist, ebenso wie die Freßschale 1, aus Kunststoff gefertigt und bildet ein Teil der Freßschale, das in verschließender Stellung als in die Freßschale integriert erscheint.

Das Verschlußelement 3 weist in seinem Zentrum eine kegelförmige Vorwölbung 5 auf, deren Kegelfuß 6 in einen zur Peripherie 4 des Verschlußelementes 3 hin abfallenden Flächenabschnitt 7 ausläuft.

Sowohl das Verschlußelement 3 als auch die Freßschale 1 weisen gegenseitig in Wirkverbindung bringbare Verriegelungsmittel 8 auf, die jeweils mehrere Bauteile umfassen und die sich sowohl an der Peripherie 4 des Verschlußelementes befinden, als auch am Rand 2 des Durchbruches. Es sind bei diesem Ausführungsbeispiel vier Verriegelungsmittel 8, 8', 8'', 8''' vorhanden, die gleichmäßig über die Peripherie 4, d. h. den Umfang des Verschlußelementes 3 bzw. den Rand 2 des Durchbruches der Freßschale 1 verteilt sind.

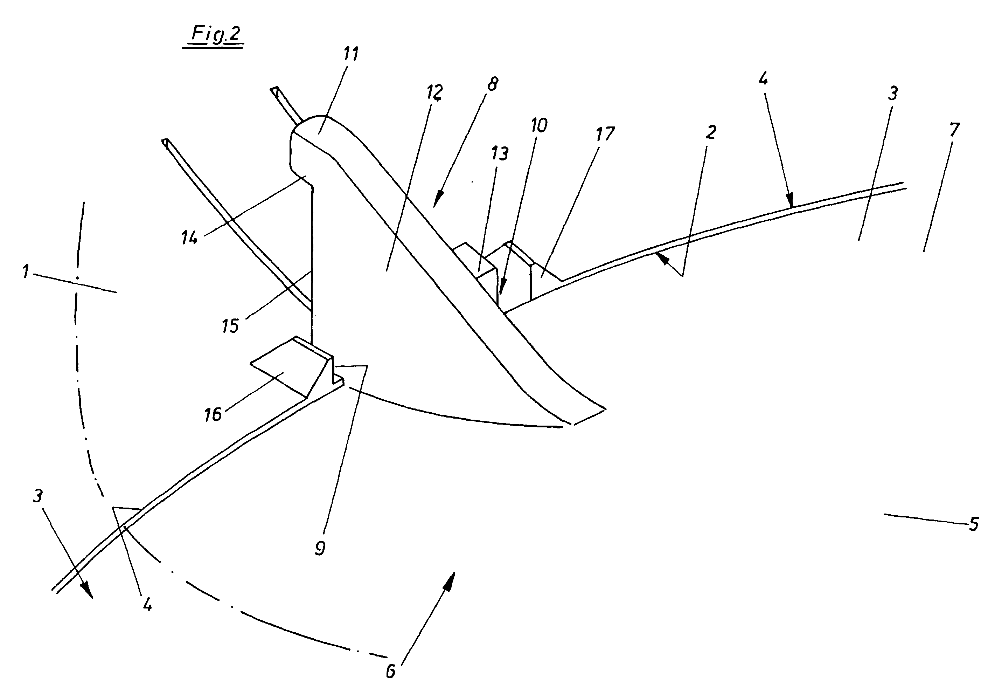

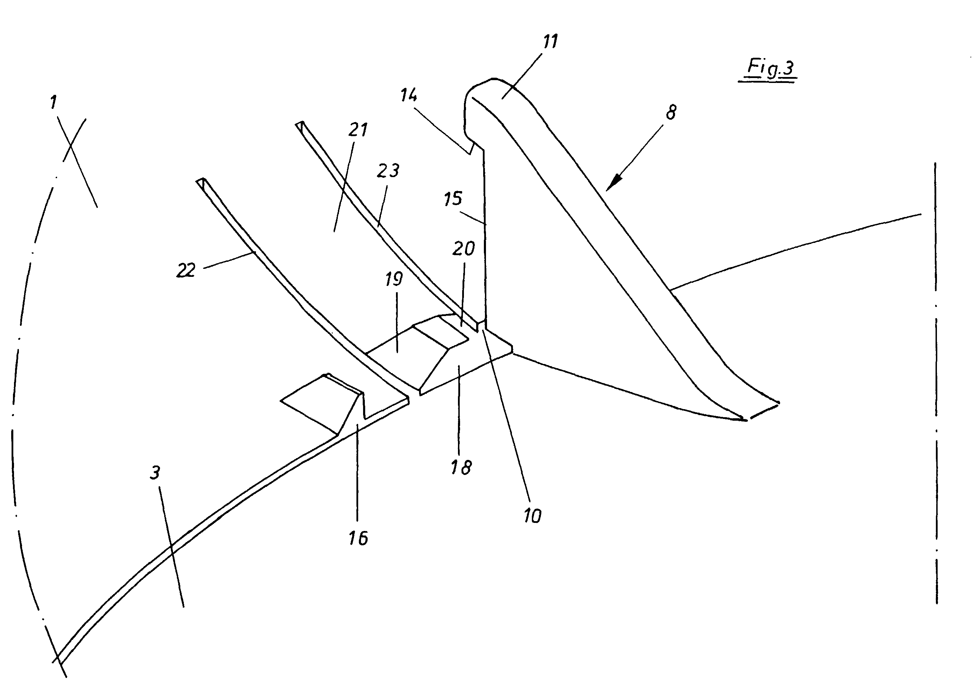

Fig. 2 zeigt eine Ansicht eines Teils der Fig. 1 in vergrößertem Maßstab und zwar den Teilbereich der Fig. 1, in welchem sich das Verriegelungsmittel 8 befindet. Gleiche Bauteile sind mit gleichen Bezugszahlen bezeichnet.

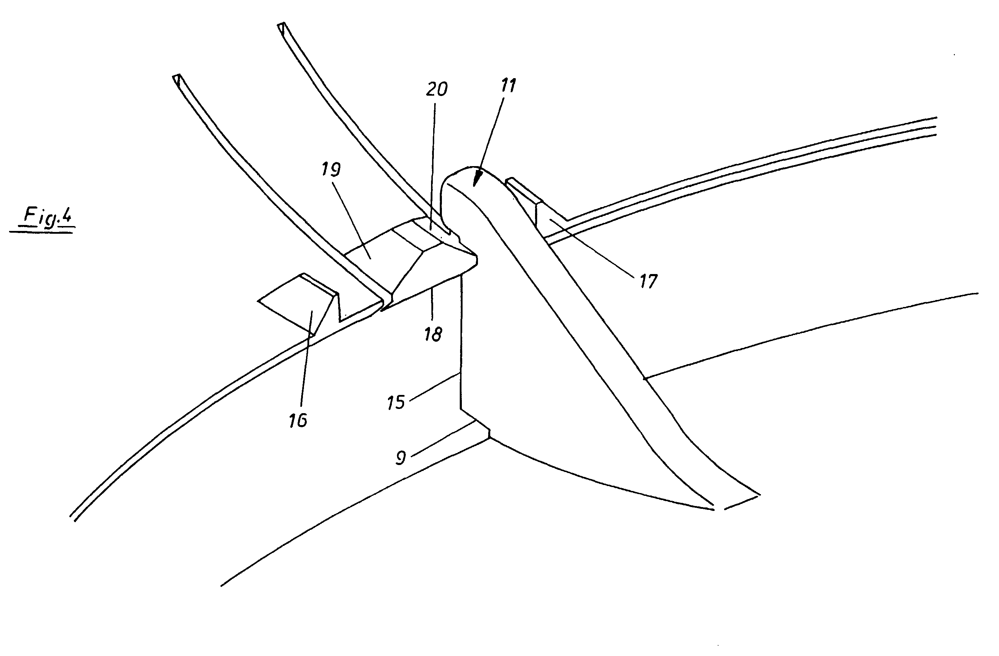

Fig. 2 verdeutlicht, daß jedes Verriegelungsmittel 8 zunächst einmal Vorsprünge 9 umfaßt, die an der Peripherie 4 des Verschlußelementes 3 derart angeordnet sind, daß sie über den Rand 2 des Reinigungsdurchbruches in der Freßschale 1 vorstehen können. Jedes Verriegelungsmittel 8 umfaßt des weiteren am Rand 2 des Reinigungsdurchbruches in der Freßschale 1 befindliche Ausnehmungen 10. Jede Ausnehmung 10 ist derart dimensioniert, daß die Vorsprünge 9 unter Führung in der ihnen jeweils zugeordneten Ausnehmung 10 quer zur Freßschale 1 bewegbar sind, sobald Verschlußelement 3 und Freßschale 1 in eine Position bzw. Stellung relativ zueinander bewegt sind, in der die Vorsprünge 9 und die Ausnehmungen 10 miteinander korrespondieren. Da in dieser Position, die in Fig. 3 dargestellt ist, das Verschlußelement 3 nach unten aus der Freßschale 1 herausfallen könnte, weil die Vorsprünge 9 nicht mehr auf dem Rand 2 aufliegen, was in Fig. 4 angedeutet ist, sind Fangorgane 11 vorgesehen. Diese umfassen eine am Verschlußelement 3 angeordnete, in die Freßschale 1 hinein vorstehende Erhebung in Form von Radialrippen 12, deren vorstehendes freies Ende eine den Grund 13 der jeweils zugeordneten Ausnehmung 10 am Rand 2 des Durchbruches in der Freßschale 1 übergreifende Fangnase 14 aufweist.

Fig. 2 läßt erkennen, daß mit besonderem Vorteil die Fangorgane 11 und die Vorsprünge 9 als Bestandteil der Verriegelungsmittel 8, 8', 8'', 8''' in einem Bauteil, nämlich der durch eine Radialrippe 12 gebildeten Erhebung vereinigt sind, die sich einfach an das Verschlußelement 3 anformen läßt.

Eine zwischen dem unteren und dem oberen Bereich der als Radialrippe 12 vorliegenden Erhebung verlaufende Vorderkante 15 ist als Führung ausgebildet, welche das entriegelte Verschlußelement 3 während seiner Bewegung in die durch Wirkung der Fangorgane 11 vorbestimmte Öffnungsposition (siehe Fig. 4) in der zugeordneten Ausnehmung 10 führt, die sich im Rand 2 des Reinigungsdurchbruches befindet.

Die Verriegelungsmittei 8, 8', 8'', 8''' umfassen des weiteren an der Freßschale 1 befindliche Justierhilfen zur Festlegung der Stellung des relativ zur Freßschale 1 bewegbaren, vorzugsweise drehbewegbaren Verschlußelementes 3. Jede Justierhilfe ist ein Anschlag 16 bzw. 17, der vorsteht in denjenigen Weg, vorzugsweise Drehweg, den die in Form der Radialrippe 12 vorliegende Erhebung des Verschlußelementes 3 bei einer Relativbewegung bzw. Drehbewegung gegenüber der Freßschale 1 beschreibt.

Wie es in Fig. 3 und Fig. 4 sichtbar ist, ist noch ein dritter Anschlag 18 vorgesehen, der schräge Auflaufflanken 19 und 20 besitzt und außerdem die Funktion eines Federnockens erfüllt, indem er auf einem Wandabschnitt 21 der Freßschale angeordnet ist, der durch zwei radial und parallel zueinander vom Rand 2 des Durchbruches aus geführte Schnittfugen 22 und 23 seitlich begrenzt ist. Die Schnittfugen ermöglichen es, daß der Wandabschnitt 21 nach unten wegfedert, sobald der Vorsprung 9 des Verriegelungsmittels 8 über die Schrägflanken 19 bzw. 20 bei einer Drehbewegung des Verschlußelementes 3 gegenüber der Freßschale 1 geführt wird.

Fig. 4 verdeutlicht, daß jede Ausnehmung 10 zwischen einem Paar von in vorbestimmtem Abstand zueinander befindlichen Anschlägen 16 und 17 angeordnet ist, wobei zwischen den Anschlägen 16 und 17 des Anschlagpaares zusätzlich der mit Schrägflanken 19, 20 ausgerüstete und als Federnocken ausgebildete dritte Anschlag 18 angeordnet ist. Die Ausnehmung 10 befindet sich zwischen dem Anschlag 17 des Anschlagpaares und dem dazwischen sitzenden dritten Anschlag 18.

## Patentansprüche

1. Vorrichtung zur Versorgung von Tieren mit Futter, mit einer Futterzuführung und einer der Bereitstellung des zugeführten Futters dienenden, napfartigen Freßschale, die etwa im Schalenzentrum einen Reinigungsdurchbruch hat, der mittels eines als ein bündig bzw. passend in den Reinigungsdurchbruch gesetzter Teil der Freßschale vorliegendes Verschlußelement freigebbar bzw. verschließbar ist, und sowohl das Verschlußelement an seiner Peripherie als auch die Freßschale im Bereich des Randes ihres Durchbruches befindliche, gegenseitig in Wirkverbindung bringbare Verriegelungsmittel aufweisen, mittels denen das Verschlußelement sowohl in der freigegebenen als auch in der verschließenden Stellung an der Freßschale festsetzbar bzw. davon lösbar ist, wobei das Verschlußelement im Zentrum eine kegelförmige Vorwölbung aufweist, deren Kegelfuß in einen zur Peripherie des Verschlußelementes hin abfallenden Flächenabschnitt ausläuft, das Verschlußelement und der Durchbruch kreisförmig gestaltet sind, und die Verriegelungsmittel umfassen
a) Vorsprünge, die an der Peripherie des Verschlußelementes angeordnet sind, derart, daß sie über den Rand des Reinigungsdurchbruchs vorstehen sowie
b) am Rand des Reinigungsdurchbruches befindliche Ausnehmungen,
wobei jede Ausnehmung derart dimensioniert ist, daß die Vorsprünge unter Führung in der ihnen jeweils zugeordneten Ausnehmung quer zur Schale bewegbar sind, sobald Verschlußelement und Freßschale in eine Position relativ zueinander bewegt sind, in der die Vorsprünge und die Ausnehmungen miteinander korrespondieren,
**dadurch gekennzeichnet,**
**daß** Fangorgane (11) für das geöffnete Verschlußelement (3) vorgesehen sind.

2. Vorrichtung nach Anspruch 1, **dadurch gekennzeichnet, daß** jedes Fangorgan (11) eine an dem Verschlußelement (3) angeordnete, in die Freßschale (1) hinein vorstehende Erhebung umfaßt, deren vorstehendes freies Ende eine den Grund (13) der jeweils zugeordneten Ausnehmung (10) im Rand (2) des Reinigungsdurchbruches der Freßschale (1) übergreifende Fangnase (14) aufweist.

3. Vorrichtung nach Anspruch 2, **dadurch gekennzeichnet, daß** jede Erhebung eine auf den Flächenabschnitt (7) gesetzte Radialrippe (12) ist, deren äußeres Ende unten bzw. im Übergangsbereich zum Verschlußelement (3) als Vorsprung (9) sowie oben bzw. im in die Freßschale (1) vorstehenden Bereich als Fangorgan (11) ausgebildet ist.

4. Vorrichtung nach einem der Ansprüche 1 bis 3, **dadurch gekennzeichnet, daß** Freßschale (1) und Verschlußelement (3) Formteile, vorzugsweise Spritzgußformteile aus Kunststoff sind, und daß jede Erhebung (Radialrippe 12) an das Verschlußelement (3) angeformt ist.

5. Vorrichtung nach einem der vorhergehenden Ansprüche, **dadurch gekennzeichnet, daß** eine zwischen unterem und oberem Bereich der als Radialrippe (12) vorliegenden Erhebung verlaufende Vorderkante (15) als Führung ausgebildet ist, welche das entriegelte Verschlußelement (3) während seiner Bewegung in die durch Wirkung der Fangorgane (11) vorbestimmte Öffnungsposition in der zugeordneten Ausnehmung (10) führt, die sich im Rand (2) des Reinigungsdurchbruches befindet.

6. Vorrichtung nach einem der Ansprüche 1 bis 5, **dadurch gekennzeichnet, daß** die Freßschale (1) Justierhilfen zur Festlegung der Position des relativ zur Freßschale (1) bewegbaren, vorzugsweise drehbewegberen Verschlußelementes (3) aufweist.

7. Vorrichtung nach Anspruch 6, **dadurch gekennzeichnet, daß** jede Justierhilfe ein Anschlag (16, 17, 18) ist, der vorsteht in denjenigen Weg, vorzugsweise Drehweg, den die Erhebungen des Verschlußelementes (3) bei einer Relativbewegung des Verschlußelementes (3) gegenüber der Freßschale (1) beschreiben.

8. Vorrichtung nach Anspruch 7, **dadurch gekennzeichnet, daß** wenigstens einer der Anschläge (18) als Federnocken ausgebildet ist.

9. Vorrichtung nach Anspruch 7 und/oder Anspruch 8, **dadurch gekennzeichnet, daß** wenigstens einer der Anschläge (16, 17, 18) mit schrägen Auflaufflanken (19, 20) ausgerüstet ist.

10. Vorrichtung nach einem der vorhergehenden Ansprüche, **dadurch gekennzeichnet, daß** jede Ausnehmung (10) zwischen einem Paar von in vorbestimmtem Abstand zueinander befindlichen Anschlägen (16, 17) angeordnet ist, wobei zwischen den Anschlägen (16, 17) des Anschlagpaares zusätzlich der mit schrägen Auflaufflanken (19, 20) ausgerüstete und/oder als Federnocken ausgebildete Anschlag als dritter Anschlag (18) angeordnet ist und wobei sich die jeweilige Ausnehmung (10) zwischen einem Anschlag (17) des Anschlagpaares und dem dazwischen befindlichen zusätzlichen dritten Anschlag (18) befindet.

## Claims

1. Arrangement for supplying animals with feed, having a feed-supply means and a cup-like feeding bowl which serves for providing the feed supplied and, approximately in the centre of the bowl, has a cleaning through-passage which can be released or closed by means of a closure element which is present as part of the feeding bowl positioned in a flush and/or fitting manner in the cleaning through-passage, and both the closure element has locking means, on its periphery, and the feeding bowl has locking means, located in the region of the border of its through-passage, it being possible for the locking means to be brought into operative connection with one another and to secure the closure element on the feeding bowl when it is in the released position and to disengage it therefrom when it is in the closing position, it being the case that the closure element has a central conical protuberance, the bottom of which terminates in a surface-area section which slopes down in the direction of the periphery of the closure element, the closure element and the through-passage are of circular configuration, and the locking means comprise
a) protrusions which are arranged on the periphery of the closure element such that they project beyond the border of the cleaning through-passage, and
b) recesses located on the border of the cleaning through-passage,
each recess being dimensioned such that the protrusions, with guidance in the recess assigned to them in each case, can be moved transversely to the bowl as soon as the closure element and feeding bowl have been moved into a position relative to one another in which the protrusions and the recesses correspond with one another, **characterized in that** intercepting elements (11) are provided for the open closure element (3).

2. Arrangement according to Claim 1, **characterized in that** each intercepting element (11) comprises an elevation which is arranged on the closure element (3), projects into the feeding bowl (1) and of which the projecting free end has an intercepting nose (14) which engages over the base (13) of the respectively associated recess (10) in the border (2) of the cleaning through-passage of the feeding bowl (1).

3. Arrangement according to Claim 2, **characterized in that** each elevation is a radial rib (12) which is positioned on the surface-area section (7), of which the outer end is designed at the bottom, or in the transition region to the closure element (3), as a protrusion (9) and at the top, or in the region projecting into the feeding bowl (1), as an intercepting element (11).

4. Arrangement according to one of Claims 1 to 3, **characterized in that** the feeding bowl (1) and closure element (3) are mouldings, preferably injection mouldings made of plastic, and **in that** each elevation (radial rib 12) is integrally formed on the closure element (3).

5. Arrangement according to one of the preceding claims, **characterized in that** a front edge (15), which runs between the bottom and the top regions of the elevation in the form of a radial rib (12), is designed as a guide which guides the unlocked closure element (3) during its movement into the opening position, predetermined by action of the intercepting elements (11), in the associated recess (10) located in the border (2) of the cleaning through-passage.

6. Arrangement according to one of Claims 1 to 5, **characterized in that** the feeding bowl (1) has adjusting aids for securing the position of the closure element (3) which can be moved, preferably rotated, relative to the feeding bowl (1).

7. Arrangement according to Claim 6, **characterized in that** each adjusting aid is a stop (16, 17, 18) which projects into that path, preferably rotary path, which is described by the elevations of the closure element (3) when the closure element (3) is moved relative to the feeding bowl (1).

8. Arrangement according to Claim 7, **characterized in that** at least one of the stops (18) is designed as a resilient convexity.

9. Arrangement according to Claim 7 and/or Claim 8, **characterized in that** at least one of the stops (16, 17, 18) is provided with sloping run-on flanks (19, 20).

10. Arrangement according to one of the preceding claims, **characterized in that** each recess (10) is arranged between a pair of stops (16, 17) which are spaced apart from one another by a predetermined distance, the stop which is provided with sloping run-on flanks (19, 20) and/or designed as a resilient convexity being arranged, in addition, as a third stop (18) between the stops (16, 17) of the pair of stops, and the respective recess (10) being located between a stop (17) of the pair of stops and the additional, third stop (18) located therebetween.

## Revendications

1. Dispositif pour distribuer de la nourriture à des animaux, comportant une arrivée de nourriture, une écuelle en forme de godet, servant à préparer la nourriture apportée, qui présente approximativement en son centre un ajour de nettoyage qui peut être dégagé ou fermé au moyen d'un élément de fermeture situé devant l'écuelle, en tant qu'élément placé à niveau ou ajusté dans l'ajour de nettoyage, et l'élément de fermeture comportant à sa périphérie ainsi que l'écuelle dans la zone du bord de son ajour, des moyens de verrouillage qui peuvent être amenés en liaison active réciproque et au moyen desquels l'élément de fermeture peut être fixé à l'écuelle ou séparé de celle-ci aussi bien dans la position dégagée que dans la position de fermeture, l'élément de fermeture présentant au centre un pré-bombage en forme de coin dont le pied de coin débouche dans une partie de surface descendant vers la périphérie de l'élément de fermeture, l'élément de fermeture et l'ajour étant de forme circulaire, et les moyens de verrouillage comprenant :
a) des saillies qui sont disposées à la périphérie de l'élément de fermeture de manière qu'elles dépassent du bord de l'ajour de nettoyage, ainsi que
b) des évidements se trouvant sur le bord de l'ajour de nettoyage,
chaque évidement étant dimensionné de manière que les saillies soient déplaçables, de manière guidée, dans l'évidement qui leur est respectivement associé, transversalement à l'écuelle, dès que l'élément de fermeture et l'écuelle sont déplacés l'un par rapport à l'autre dans une position dans laquelle les saillies et les évidements correspondent les unes aux autres,
**caractérisé en ce que** des organes de retenue (11) sont prévus pour l'élément de fermeture (3) ouvert.

2. Dispositif selon la revendication 1, **caractérisé en ce que** chaque organe de retenue (11) comprend un relief disposé sur l'élément de fermeture (3) et pénétrant à l'intérieur de l'écuelle (1), dont l'extrémité libre saillante comporte un ergot de retenue (14) passant sur le fond (13) de l'évidement (10) correspondant dans le bord (2) de l'ajour de nettoyage de l'écuelle (1).

3. Dispositif selon la revendication 2, **caractérisé en ce que** chaque relief est une nervure radiale (12) placée sur la partie de surface (7), dont l'extrémité extérieure est réalisée, à sa partie inférieure ou dans la zone de transition avec l'élément de fermeture (3), en tant que saillie (9) et à sa partie supérieure ou dans la zone faisant saillie dans l'écuelle (1), en tant qu'organe de retenue (11).

4. Dispositif selon l'une des revendications 1 à 3, **caractérisé en ce que** l'écuelle (1) et l'élément de fermeture (3) sont des éléments moulés, de préférence des éléments moulés par injection en matière plastique, et **en ce que** chaque relief (nervure radiale 12) est venu de moulage sur l'élément de fermeture (3).

5. Dispositif selon l'une des revendications précédentes, **caractérisé en ce qu'**un bord avant (15), s'étendant entre la zone inférieure et la zone supérieure du relief se présentant sous la forme d'une nervure radiale (12), est conçu en tant que guide qui guide l'élément de fermeture (3) déverrouillé pendant son déplacement dans la position d'ouverture, prédéfinie par l'action des organes de retenue (11), dans l'évidement (10) associé, lequel se trouve dans le bord (2) de l'ajour de nettoyage.

6. Dispositif selon l'une des revendications 1 à 5, **caractérisé en ce que** l'écuelle (1) comporte des auxiliaires d'ajustage pour fixer la position de l'élément de fermeture (3) déplaçable par rapport à l'écuelle (1), de préférence déplaçable en rotation.

7. Dispositif selon la revendication 6, **caractérisé en ce que** chaque auxiliaire d'ajustage est une butée (16, 17, 18) qui fait saillie dans la trajectoire, de préférence la trajectoire en rotation, que les reliefs de l'élément de fermeture (3) décrivent lors d'un mouvement relatif de l'élément de fermeture (3) par rapport à l'écuelle (1).

8. Dispositif selon la revendication 7, **caractérisé en ce qu'**au moins l'une des butées (18) est réalisée en tant que came à ressort.

9. Dispositif selon la revendication 7 et/ou la revendication 8, **caractérisé en ce qu'**au moins l'une des butées (16, 17, 18) est dotée de flancs de butée (19, 20) obliques.

10. Dispositif selon l'une des revendications précédentes, **caractérisé en ce que** chaque évidement (10) est disposé entre une paire de butées (16, 17) se trouvant à une distance prédéfinie l'une de l'autre, entre les butées (16, 17) de la paire de butées étant disposée en outre la butée, servant de troisième butée (18), dotée de flancs de butée (19, 20) obliques et/ou réalisée en tant que came à ressort, et l'évidement (10) respectif se trouvant entre une butée (17) de la paire de butées et la troisième butée (18) supplémentaire se trouvant entre elles.
